# EUROPÄISCHE PATENTSCHRIFT

(11) **EP 1 629 931 B1**
(45) Veröffentlichungstag und Bekanntmachung des Hinweises auf die Patenterteilung: **31.03.2010**
(21) Anmeldenummer: 05018009.0
(22) Anmeldetag: 19.08.2005
(51) Int. Cl.: B23K 26/02, B23K 26/24, B23K 26/32, B23K 26/03

(54) **Verfahren und Vorrichtung zum Laserstrahl-Schweissen zum Fügen von Blechen, mit einem durch einen den Laserplasma erfassenden Sensor steuerbaren Spalt zwischen den Blechen**
Process and device for laser welding for assembling metal sheets with a gap located between the metal sheets controlled by a sensor measuring the plasma created by the laser
Procédé et dispositif de soudage laser pour assembler des tôles métalliques avec un jeu entre les tôles controllé par un capteur mesurant le plasma généré par le laser

(30) Priorität: 25.08.2004 DE 102004041136
(43) Veröffentlichungstag der Anmeldung: 01.03.2006
(73) Patentinhaber: FFT EDAG Produktionssysteme GmbH & Co. KG, 36041 Fulda (DE)
(72) Erfinder: Schneegans, Jochen, Dr.-Ing., 56237 Wittgert (DE)
(74) Vertreter: Müller, Eckhard

(56) Entgegenhaltungen:
- EP-A- 1 238 744
- DE-A1- 3 820 848
- DE-A1- 10 247 438
- DE-A1- 10 259 604
- DE-B3- 10 248 955
- DE-U1- 20 112 510

## Beschreibung

Die Erfindung betrifft ein Laserstrahl-Schweißverfahren zum Fügen von Bauteilen, wie Bleche, insbesondere beschichtete Bleche, wobei die Fügeebene der Bauteile und der Laserstrahl einen Winkel größer 30°, bevorzugt im Bereich von 60° bis 120°, einschließen, die Fügeflächen der Bauteile im Bereich der Fügestelle einen Fügespalt bilden, wobei mittels eines Sensors Prozessmesswerte des Schweißverfahrens erfasst werden und über ein Steuer- oder Regelkreis und einen Aktuator Prozessparameter in Abhängigkeit der erfassten-Prozessmesswerte eingestellt werden, wobei der Sensor Prozessmesswerte des laserinduzierten Schweißplasmas erfasst und der Aktuator als wenigstens einen Prozessparameter den Fügespalt der Bauteile einstellt. Die Erfindung betrifft weiterhin eine Vorrichtung, insbesondere zur Durchführung des Laserstrahl-Schweißverfahrens, mit einem Laser beziehungsweise einem Laserkopf zum Fügen von wenigstens zwei oder mehreren Blechen mittels Laserstrahlschweißen, wobei die Bleche im Überlappstoß ausgerichtet sind und die Fügefläche der Bleche im Bereich der Fügestelle einen Fügespalt bilden, wobei ein Sensor Prozessmesswerte des laserinduzierten Schweißplasmas erfasst und der Fügespalt der Bleche mittels eines Aktuators einstellbar ist, wobei der Aktuator über einen Steuer- oder Regelkreis angesteuert wird.

### Stand der Technik

Ein derartiges Verfahren beziehungsweise eine derartige Vorrichtung sind bereits aus der DE 38 20 848 A1 bekannt, die als nächstliegender Stand der Technik angesehen wird, und die den Oberbegriff des Verfahrenanspruchs 1 und des Vorrichtunganspruchs 11 offenbart. Dort ist ein Verfahren zum Laserstrahlschweißen von dicken Blechen offenbart, bei dem die Fügeebene der Bauteile und die Richtung eines Laserstrahls einen Winkel von etwa 90° einschließen. Mittels eines Sensors werden Prozessmesswerte eines laserinduzierten Plasmas erfasst, wobei über einen Regelkreis und einen Aktuator der Abstand der Bleche an der Fügestelle, also der Fügespalt, eingestellt wird. Der Fügespalt ist durch entsprechende Ausrichtung der Bleche keilförmig ausgebildet, wobei zur Verringerung der Wärmeeinwirkung auf das Werkstück der Laserstrahl in die eine und zur Steigerung der Wärmeeinwirkung in die andere, entgegengesetzte Richtung verstellbar ist. Insoweit erfolgt bei der DE 38 20 848 A1 eine Einstellung der Fügespaltbreite durch räumliches Verstellen des Laserstrahls.

Aus der DE 10247438 A1 sind ein Verfahren und eine Vorrichtung zum Schweißen von Werkstücken bekannt mit einer Schweißoptik, wobei ein erstes Werkstück mittels eines verschieblichen Anpresselements gegen ein zweites Werkstück gepresst und die vom Anpresselement auf das erste Werkstück ausgeübte Ist-Kraft prozessbegleitend gemessen wird. Um eine hohe Genauigkeit bei geringem Bauraum zu erreichen, wird eine Soll-Kraft fest vorgegeben und bei Abweichungen zwischen Ist- und Soll-Wert der Kraft das Anpresselement näherungsweise senkrecht zur Schweißnaht kontinuierlich so verschoben, dass die Ist-Kraft der Soll-Kraft entspricht. Ferner wird die Schweißoptik gemeinsam mit dem Anpresselement verschoben.

Die EP 1238744 A1 offenbart ein Verfahren zur Bestimmung der Schweißqualität an einer Schweißnaht zwischen Werkstücken mittels einer Laservorrichtung auf der Basis eines Untersuchungsergebnisses einer Lichtentwicklung während eines Schweißvorgangs. Dabei wird die Emissionsintensität eines sichtbaren Lichts, welches von der Schweißnaht während des Laserschweißens ausgesandt wird, erfasst. Der Laserstrahl der Laservorrichtung weist einen Wellenlängenbereich in der Nähe von Infrarot auf. Es wird ein erstes Erfassungssignal ausgegeben, welches die Lichtemissionsintensität des sichtbaren Lichts anzeigt. Weiterhin wird die Intensität eines reflektierten Lichts des Lasers von der Schweißnaht während des Laserschweißens erfasst und ein zweites Erfassungssignal ausgegeben, welches die Lichtintensität des reflektierten Lichts anzeigt. Die Frequenzen des ersten und des zweiten Erfassungssignals werden analysiert und bestimmt, ob das Ergebnis der Laserschweißung in einem vorteilhaften Schweißbereich liegt. Auch ist es aus diesem Dokument bereits bekannt, das Vorliegen eines zu großen Fügespaltes der Bauteile über eine Spektralanalyse des Lichts, welches durch eine von zwei Detektoren erfasst wird, zu detektieren.

Aus der DE 201 12 510 U1 ist eine Schweißeinrichtung bekannt, bei der eine die Schweißenergie mit Distanz zum Werkstück übertragene Schweißeinheit und eine Andrückvorrichtung mit mindestens einem auf ein oder mehrere Werkstücke einwirkenden Andrückelement vorgesehen sind, wobei die Andrückvorrichtung weggesteuert ist.

Aus der DE 202 209 949 U1 ist ein gattungsgemäßes Laserstrahl-Schweißverfahren bekannt, wobei der Fügespalt zwischen zwei Bauteilen mittels einer Spannvorrichtung eingestellt wird. Allerdings wird der Fügespalt nicht in Abhängigkeit charakteristischer Messwerte der erfassten Plasmastrahlung, sondern in Abhängigkeit von einem Kraftsensor geregelt.

Ein Verfahren beziehungsweise eine weitere Vorrichtung sind beispielsweise aus der DE 198 54 217 A1 bekannt.

Insbesondere beim Laserschweißen von beschichteten, insbesondere verzinkten Blechen besteht das Problem, einen Ausgasungsraum für das im Schweißbereich verdampfende Beschichtungsmaterial vorzusehen. Unter dem Einfluss der Laserstrahlung wird das bevorzugt als Stahlblech ausgebildete Bauteil bei ca. 1.500°C schmelzflüssig, das Zink oder die sonstige Oberflächenbeschichtung verdampft jedoch bereits bei niedrigeren Temperaturen, zum Beispiel ca. 900°C, zwischen den Kontaktstellen der sich überlappenden Bauteile. Wegen des verfahrensspezifisch kleinen Schmelzbades und wegen seiner kurzen Existenzzeitdauer wirkt sich die im Verhältnis große abzuführende Beschichtungsdampfmenge nachteilig auf die Qualität der Laserschweißverbindung aus.

Insoweit ist nach der DE 198 54 217 A1 vorgesehen, dass die miteinander zu verschweißenden Bleche auf der einen Seite der Überlappnaht einander aufliegen und auf der anderen Seite der Überlappnaht geringfügig voneinander beabstandet sind, um zwischen sich den Ausgasungsraum zu bilden. Dabei weist bevorzugt das Oberblech eine durch zwei Radien definierte Stufe auf, deren Lage mittels eines Sensors erkannt wird. Die Position des Schweiß-Laserstrahls wird in Abhängigkeit dieser Sensor-Erkennung so eingestellt, dass sich dessen Brennfleckmitte und somit auch die Überlappnaht in einem engen, im Bereich dieser Radien liegenden Sollbereich befindet. Die Laserstrahl-Schweißvorrichtung zeichnet sich dadurch aus, dass ein ansonsten üblicher Fokussierspiegel mittels eines mit einem Inkrementalgeber versehenen Schrittmotors quer zum Schweißnahtverlauf verfahrbar ist und somit die Funktion eines Umlenkspiegels zur gewünschten Positionierung des Schweiß-Laserstrahls anhand der von an der Schweißvorrichtung befestigen Sensor gewonnenen Lagererkennung übernimmt.

Aus der DE 19 43 752 C2 ist eine Fügestelle für oberflächenbeschichtete, durch zumindest eine Überlappnaht laserverschweißte Bauteile- oder verzinkte Blechfrontteile bekannt, wobei quer zur Überlappnaht Entgasungskanäle für die beim Schweißprozess entstehenden Beschichtungsdämpfe verlaufen. Zur Erzielung einer qualitativ hochwertigen und vor allem hochfesten Schweißverbindung ist es vorgesehen, dass die Entgasungskanäle im verschweißten Zustand der Bauteile im Überlappungsbereich einschließlich der Überlappnaht durchgehend freigehalten und beidseitig nach außen geöffnet sind.

Aus der DE 102 22 786 A1 ist ein Verfahren zur Positionierung von Werkstücken bei Laserbearbeitungsprozessen bekannt, welches vor und/oder während der Laserbearbeitung einsetzbar ist. Mittels einer Kamera werden Prozesseigenschaften erfasst, wobei hieraus die Position des Werkstückes bestimmt und geregelt wird. Aufgrund dieser Maßnahmen soll die Notwendigkeit einer gesonderten Mess- und Positionierstation entfallen. Zur Bestimmung der Positionierung soll das Prozessleuchten ausgenutzt werden, indem markante Strukturen oder Kanten der Fügeteile detektiert werden. Dabei kann die vom Werkstück während des Scnweißprozesses ausgehende Strahlung über einen Bearbeitungszweig und einen Strahlteiler in einen Beobachtungszweig gelangen. Über einen Bildsensor wird die Position des Werkstückes bestimmt. Diese Position wird mit einer vorgegebenen Sollposition verglichen, wobei mittels einer Maschinensteuerung die Position des Werkstückes gegebenenfalls nachgeregelt wird.

Aus der DE 41 06 007 A1 sind ein Verfahren sowie eine Vorrichtung zur Bearbeitung von Werkstücken mit Laserstrahlung bekannt, bei dem der Bearbeitungsprozess, insbesondere die Einschweißtiefe oder der Durchschweißgrad überwacht werden, indem aus einem nicht abschirmenden, laserinduzierten Plasma oder Dampf herrührende optische und/oder akustische Signal detektiert werden. Um zuverlässige, von Signalschwankungen möglichst unabhängige Überwachungsergebnisse zu erhalten, werden die Signale einer Frequenzanalyse unterworfen, wobei die mittleren Amplituden zweier unterschiedlicher Frequenzbänder der analysierten Frequenzen mit einer vorbestimmten Rechenfunktion zur Ermittlung einer Bewertungsgröße verwendet werden.

### Problem

Demgegenüber liegt der vorliegenden Erfindung die Aufgabe zugrunde, ein Laserstrahl-Schweißverfahren beziehungsweise Laserstrahl-Schweißvorrichtung dahingehend weiter zu bilden, dass insbesondere beschichtete Bauteile prozesssicher mittels eines Laserstrahls verschweißt werden können. Insbesondere soll es nicht erforderlich sein, die Bauteile mit besonderen Prägungen oder dergleichen zu versehen. Schließlich soll das Verfahren beziehungsweise die Vorrichtung einfach und sicher ausgebildet sein.

### Problemlösung

Ein Verfahren gemäß der Erfindung wird im Anspruch 1 definiert.

Untersucht man die beim Schweißprozess entstehenden Signale des Schweißplasmas beziehungsweise der Emissionsquelle "Schmelzbad" unter dem Aspekt der Schmelzbadveränderung infolge von Fügespalten, so stellt man fest, dass die Signale bei veränderlicher Weite des Fügespalte Veränderungen unterliegen. Konkret bedeutet dies, dass zum Beispiel mit der Änderung der Fügespaltweite sich die Intensität des sichtbaren Plasmas sowie die akustische Emission ebenso verändern, wie Emissionen im unsichtbaren Spektralbereich oder nicht hörbaren Frequenzbereich. Die Detektion der Fügespaltweite anhand von aus dem laserinduzierten Schweißplasma abgeleiteten Meßwerten ist somit für den Laserschweißprozess eine entscheidende Prozessgröße. Mittels dieser Prozessmesswerte kann zum einen eine Vorhersage für Folgeschweißungen vorgenommen oder es können geeignete Stellgrößen definiert werden. Ferner besteht auch die Möglichkeit, aus der Messgröße in Echtzeit eine Stellgröße für die in den Prozess eingebundenen Fertigungseinrichtungen beziehungsweise Aktuatoren und sonstige Stell- und Steuermittel zur Verfügung zu stellen. Generell kann mit einem solchen Ansatz mittels einer Steuerung oder Regelung Einfluss auf die stationären Spannelemente für die zu fugenden Bauteile beziehungsweise auf die Werkzeuge einer Führungsmaschine, zum Beispiel Drahtförderer oder auch mitbewegte Spannelemente, Einfluss genommen werden.

Gemäß der Erfindung ist es vorgesehen, dass als Prozessmesswerte das Frequenzspektrum oder ein Teil des Frequenzspektrums des Schweißplasmas erfasst werden.

Weiterhin besteht die Möglichkeit, dass das sichtbare Frequenzspektrum des Schweißplasmas erfasst wird.

Weiterhin besteht die Möglichkeit, dass der Aktuator beziehungsweise das Spannwerkzeug stationär angeordnet oder auch als mitlaufende Spannvorrichtung ausgebildet ist. Im erstgenannten Fall sind die Positionier- oder Spannwerkzeuge für den Fügeflansch der zu fügenden Bauteile fest mit einer Bauteilspannvorrichtung und nicht mit dem Laserkopf verbunden. Dabei kommen bevorzugt berührungslos arbeitende Laseroptiken zum Einsatz. Die Steuerung oder Regelung kann auf das Positionier- oder Spannwerkzeug angewendet werden, sofern das Werkzeug in dem Positionier- oder Spannweg einstellbar ist.

Insbesondere bietet es sich an, dass der Steuer- oder Regelkreis über den Aktuator Prozessparameter in Echtzeit einstellt.

Weiterhin besteht auch die Möglichkeit, dass als weiterer Prozessparameter die Zufuhr von Zusatzmaterial, insbesondere Zusatzdraht, eingestellt wird, so dass die Größe des Schmelzbades beeinflussbar ist.

Nach einer anderen, besonders vorteilhaften Ausgestaltung des erfindungsgemäßen Verfahrens ist es vorgesehen, dass wenigstens eines der zu fügenden Bauteile beziehungsweise Bleche im Bereich der Fügestelle im Überlappstoß mit der Fügeebene einen spitzen Winkel, insbesondere in einem Winkelbereich > 0° bis < 10° oder < 15°, einschließt.

Auch besteht von Vorteil die Möglichkeit, dass wenigstens zwei Bleche, ein Ober- und Unterblech, oder auch drei oder mehr Bleche, beispielsweise ein Ober-, Zwischen- und Unterblech, an der Fügestelle gefügt werden, wobei zwischen benachbarten Blechen der Fügespalt vorgesehen ist.

Dabei liegt die Fügestelle der Bauteile oder Bleche bevorzugt im Bereich überlappender Flansche.

Weiterhin ist es besonders vorteilhaft, dass die Bauteile beziehungsweise Bleche benachbart zur Fügstelle einander anliegen und unter spitzwinkliger Ausrichtung zueinander im Bereich der Fügestelle den Fügespalt bilden.

Gemäß der Erfindung wird eine Vorrichtung nach Anspruch 11 definiert.

Mit dieser Vorrichtung ist es möglich, in Form einer Steuerung oder Regelung die Fügespaltweite in Abhängigkeit von Prozessmesswerten, insbesondere des laserinduzierten Schweißplasmas, zu steuern oder zu regeln. Je nach Prozessnotwendigkeit kann demnach eine Steuerung oder Regelung der Weite des Fügespaltes erfolgen. Im Fall einer Steuerung kann somit beispielsweise nach einer ersten Schweißung von Bauteilen anhand der erfassten Messwerte ein neuer Stellwert für die nachfolgend durchzuführende Schweißung der nächsten Bauteile gewonnen werden. Insbesondere besteht die Möglichkeit, das erfindungsgemäße Verfahren auch als Qualitätsanalysesystem einzusetzen, wobei dann die erfassten Messwerte dazu verwendet werden, die Qualität der Fügung zu bewerten. Im Allgemeinen erfolgt hierbei die Verarbeitung der Messwerte nicht in Echtzeit. Eine Echtzeitverarbeitung ist jedoch dann erforderlich, wenn die Weite des Fügespaltes während des Fügevorgangs auf einen Sollwert geregelt, also unmittelbar in den Fügevorgang eingegriffen wird.

Nach einer Ausgestaltung der Erfindung ist es insoweit vorgesehen, dass zwischen den Rollen die zu fügenden Bleche mit spitzwinklig zueinander ausgerichteten, einen Fügespalt bildenden Fügeflächen angeordnet sind.

Bevorzugt sind der Aktuator beziehungsweise die Rolle oder Rollen mittels eines servoelektrischen Antriebes stellbar.

Dabei ist es vorgesehen, dass die Drehachse der einen oder mehreren Rollen und die Fügeebene der Bleche einen Winkel im Bereich von ca. 5° bis ca. 15° einschließen.

Es versteht sich, dass der Aktuator anstelle von einer oder mehreren Rollen auch sonstige Andruckelemente beziehungsweise Positioniereinrichtungen, zum Beispiel Stifte, Stahlstifte oder Andruckfinger aufweisen kann. Dabei gleiten der oder die Stifte, Finger oder dergleichen vor oder neben der Füge- oder Schweißstelle mit der Spitze über das oder die zu fügenden Bauteile oder Bleche und üben die Andruckkräfte zur Einstellung der Weite des Fügespaltes zwischen den Bauteilen aus.

Auch besteht die Möglichkeit, dass der Aktuator beziehungsweise die Spannvorrichtung stationär angeordnet oder relativ zu den Blechen verfahrbar ist.

Bevorzugt ist der Aktuator beziehungsweise die Spannvorrichtung in einen Laserschweißkopf integriert.

Der Vorteil der erfindungsgemäßen Vorrichtung liegt unter anderem darin, dass zusätzlicher Bauraum für den Antrieb nicht benötigt wird, dass eine kompakte Bauweise im Schweißumfeld gegeben ist und zusätzliche Störkonturen im Schweißbereich nicht vorhanden sind.

Aufgrund der erfindungsgemäßen weggesteuerten Rollen-, Stift- oder Fingeroositionierung ist die Einstellung eines vorgegebenen beziehungsweise konstanten Fügespaltes der Fügepartner ermöglicht, wobei der Abstand der Rollen, Finger oder Stifte auch auf die Dicke der Fügepartner abstimmbar ist.

Darüber hinaus sind auch verschiedene Dickenpaarungen der Fügepartner mit ein und demselben Laserschweißkopf schweißbar.

Ein weiterer Vorteil liegt auch darin, dass auf die zu verschweißenden Fügepartner minimale Kräfte einwirken, wobei diese Krafteinwirkung auch auf die verschiedenen Werkstofffestigkeiten abstimmbar ist.

Die erfindungsgemäße Vorrichtung kann beim Verschweißen von zwei, drei oder mehreren Fügepartnern und auch zum Schweißen in beliebigen Raumlagen eingesetzt werden. Sofern der Aktuator oder die Spannvorrichtung aus zwei, die zu fügenden Bauteile zwischen sich aufnehmenden Rollen, Finger, Stiften oder dergleichen besteht, kann eine der Rollen, Finger oder Stifte zur Antastung eines Fügepartners verwendet und die andere Rolle, der andere Finger oder Stift durch entsprechendes weggesteuertes Verfahren zur Einstellung der Spaltweite des Fügespaltes eingesetzt werden.

Weitere Ziele, Vorteile, Anwendungsmöglichkeiten und Ausgestaltungen der vorliegenden Erfindung ergeben sich aus der nachfolgenden Beschreibung von Ausführungsbeispielen anhand der Zeichnungen.

### Ausführungsbetspiel

Es zeigen:
- Figur 1: in schematische Darstellung ein Ausführungsbeispiel der erfindungsgemäßen Vorrichtung zum Laserschweißen,
- Figur 2: die zu fügenden Bauteile vor dem Schweißen, wobei der Flansche der Bauteile überlappen,
- Figur 3: die zu fügenden Bauteile der Figur 2 während des Schweißprozesses,
- Figur 4: ein Ausführungsbeispiel eines Laserkopfes mit Servo-Rollen-Spanntechnik nach der Erfindung,
- Figur 5 und 6: schematische Darstellungen zur Erläuterung des Verfahrens zum Steuern oder Regeln der Weite des Fügespaltes und
- Figur 7: in schematischer Darstellung ein weiteres Ausführungsbeispiel einer erfindungsgemäßen Vorrichtung.

Das Laserstrahl-Schweißverfahren zum Fügen von Bauteilen, wie Bleche 10, 12, 14, insbesondere beschichteten Blechen, sieht einen Sensor 30 vor, der Prozessmesswerte des Schweißverfahrens erfasst.

Die Fügeebene 16 der Bauteile 10, 12, 14 und der Laserstrahl 18 schließen bevorzugt einen Winkel größer 30°, bevorzugt im Bereich von 60° bis 120°, ein. Die Fügeflächen 20, 22 der Bauteile 10, 12, 14 im Bereich der Fügestelle 24 bilden einen Fügespalt 26.

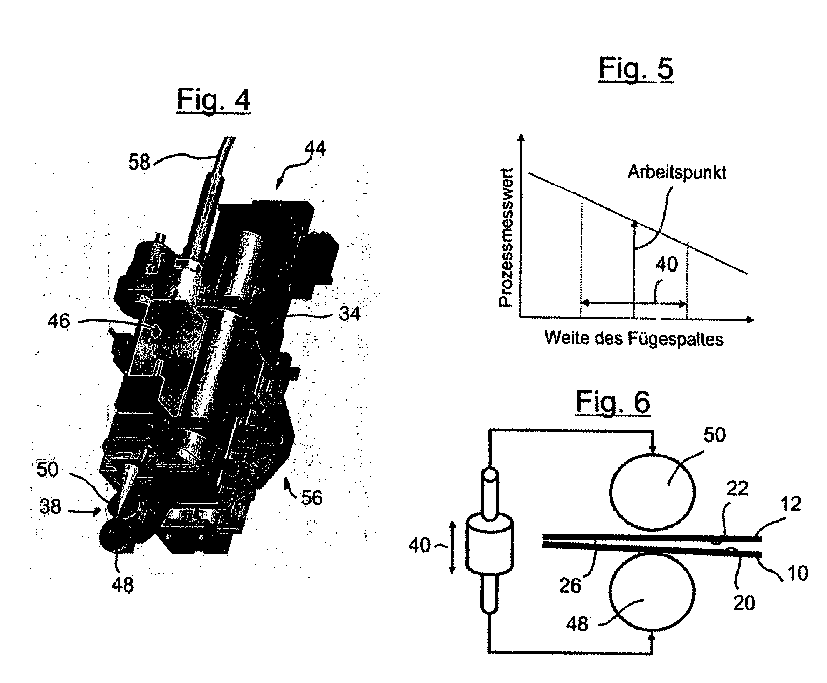

Wie aus Figur 5 ersichtlich ist, nimmt der Prozessmesswert, der aus dem Frequenzspektrum des laserinduzierten Schweißplasmas 36 gewonnen wird, mit der Weite des Fügespaltes 26 ab. Dieser Prozessmesswert wird zur Einstellung der Weite des Fügespaltes 26 einem Steuer- oder Regelkreis 32 zugeführt, wobei mittels eines Aktuators 34 Prozessparameter, erfindungsgemäß die Weite des Fügespaltes, in Abhängigkeit der erfassten Prozessmesswerte, eingestellt werden. Als Prozessmesswerte werden das Frequenzspektrum oder Teile des Frequenzspektrums des Schweißplasmas 36 erfasst. Dabei besteht die Möglichkeit, einen Mittelwert des bevorzugt sichtbaren Frequenzspektrums des Schweißplasmas 36 weiterzuverarbeiten.

Der Aktuator 34 ist als Spannvorrichtung 38 ausgebildet, so dass die Bauteile 10, 12, 14 aufeinander zu und/oder voneinander weg positionierbar sind, wie dies durch den Pfeil 40 angedeutet ist. der gemäß der Erfindung als Spannvorrichtung ausgebildete Aktuator 34 kann entweder stationär angeordnet sein oder als mitlaufende Vorrichtung ausgebildet werden, welche mit dem Laser- beziehungsweise Laserkopf mit entlang der zu fügenden Bauteile verfahren wird.

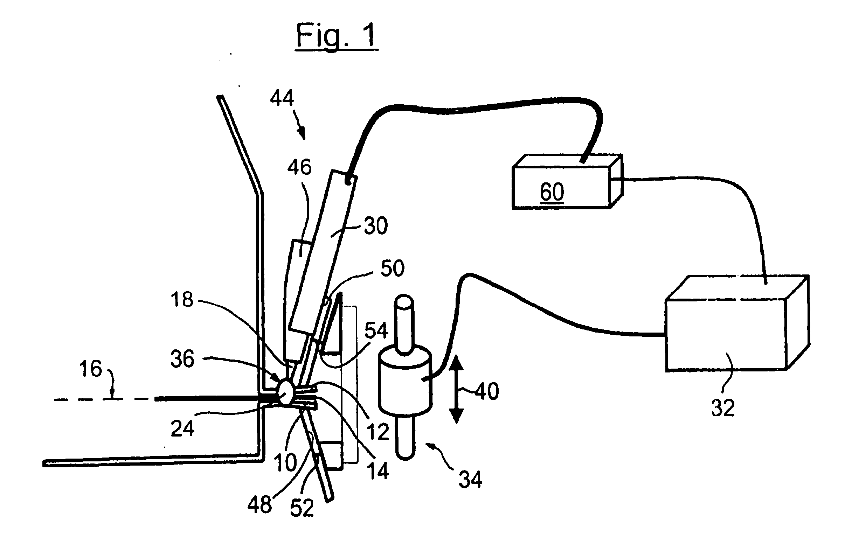

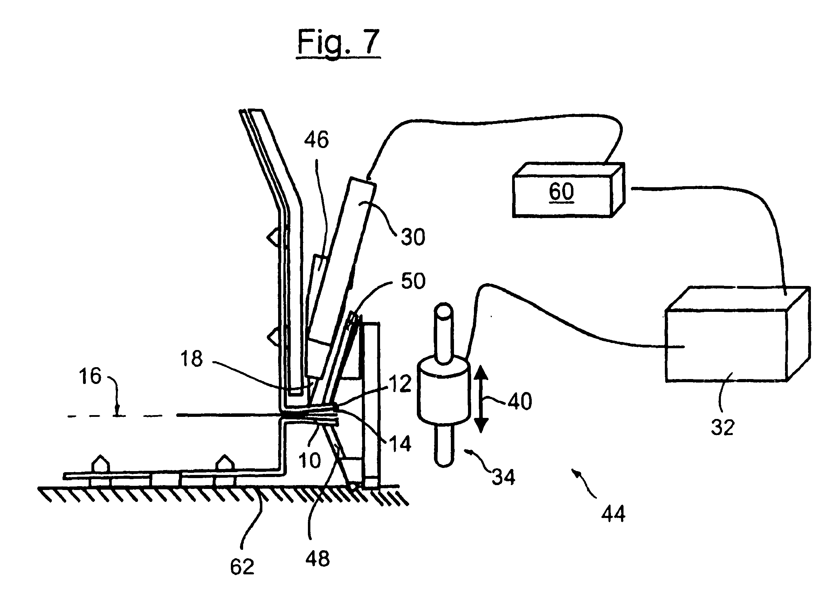

Figur 7 zeigt das Ausführungsbeispiel von einem stationär angeordneten als Spannvorrichtung (38) ausgebildeten Aktuator 34, bei dem die Spannvorrichtung 38 zur Einstellung der Weite des Fügespaltes fest mit der stationären Bauteilspannvorrichtung 62 verbunden und somit nicht verfahrbar ist. Die Andruckelemente gemäß Figur 7 sind nicht als Rolle, sondern als Finger 48, 50 oder Stift ausgebildet. Weiterhin ist ersichtlich, dass der Laserkopf beziehungsweise die Laseroptik 46 nicht mit dem Aktuator 34 gekoppelt und somit insbesondere längs der Fügestelle oder -naht verfahrbar ist. Hingegen ist beispielsweise in Figur 1 der als Spannvorrichtung (38) ausgebildete Aktuator 34 als mitlaufende Vorrichtung ausgebildet, wobei der Laserkopf beziehungsweise die Laseroptik 46 mit dem Aktuator 34 gekoppelt ist und Laserkopf und Spannvorrichtung gemeinsam entlang der Fügestelle oder -naht der zu fügenden Bauteile verfahren werden.

Der Steuer- oder Regelkreis 32 stellt bevorzugt den oder die Prozessparameter über den oder die Aktuatoren 34 in Echtzeit ein. Insbesondere besteht die Möglichkeit, als weiteren Prozessparameter die Zufuhr von Zusatzmaterial, insbesondere Zusatzdraht, einzustellen, um auch auf die Schweißbadgröße der Fügestelle Einfluss zu nehmen.

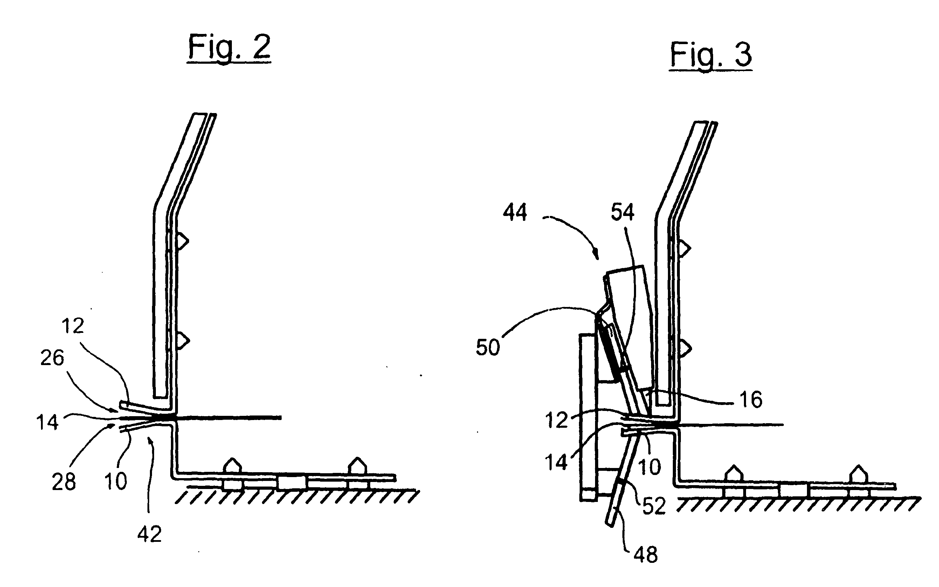

Wie insbesondere aus den Figuren 2 und 3 ersichtlich ist, schließt wenigstens eines der zu fügenden Bleche 10, 12, 14 im Bereich der Fügestelle 24 im Überlappstoß mit der Fügeebene 16 einen spitzen Winkel, insbesondere in einem Winkelbereich größer 0° bis ca. 10° oder 15° ein.

Es besteht die Möglichkeit, dass wenigstens zwei Bleche, ein Ober- und Unterblech 12, 10 oder auch drei oder mehrere Bleche, ein Ober-, Zwischen- und Unterblech 12, 14, 10 an der Fügestelle 24 mittels des Laserstrahls 18 gefügt werden, wobei zwischen benachbarten Blechen 12, 10; 12, 14; 14, 10 der Fügespalt 26, 28 vorgesehen ist. Dabei liegt die Fügestelle 24 der Bleche 10, 12, 14 im Bereich überlappender Flansche 42 der zu fügenden Bauteile. Weiterhin ist ersichtlich, dass die Bleche 10, 12, 14 benachbart zur Fügestelle 24 einander anliegen und unter spitzwinkliger Ausrichtung zueinander im Bereich der Fügestelle 24 den Fügespalt 26, 28 bilden.

Die Vorrichtung 44, insbesondere zur Durchführung des Laserstrahl-Schweißverfahrens der beschriebenen Art, weist einen Laser 46 beziehungsweise eine Laseroptik zum Fügen von wenigstens zwei oder mehreren Blechen 10, 12, 14 mittels Laserstrahlschweißens auf. Die in Figur 4 dargestellte Vorrichtung 44 ist als sogenannter Laserkopf ausgebildet, der eine Roboterbindung 56 sowie ein Laserlichtkabel 58 aufweist. Weiterhin ist der Sensor 30 gemäß Figur 1 an eine Sensorbox 60 angeschlossen, die ihrerseits mit dem Steuer- oder Regelkreis 32 in Verbindung steht.

Die Bleche 10, 12, 14 sind im Überlappstoß ausgerichtet, wobei die Fügeflächen 20, 22 der Bleche 10, 12, 14 im Bereich der Fügestelle 24 einen Fügespalt 26, 28 bilden. Die vom Sensor 30 erfassten Prozessmesswerte des laserinduzierten Schweißplasmas werden über die Sensorbox 60 dem Steuer- oder Regelkreis 32 zugeführt, wobei der Steuer- oder Regelkreis den Aktuator 34 beziehungsweise die Spannvorrichtung 38 betätigt, um den Fügespalt 26, 28 der Bleche 10, 12, 14 auf einen Sollwert einzustellen.

Wie insbesondere aus den Figuren 4 und 6 ersichtlich ist, ist gemäß der Erfindung der Aktuator 34 als Spannvorrichtung 38 ausgebildet. Dabei umfasst der Aktuator 34 wenigstens eine Rolle 48 beziehungsweise betätigt diese insoweit, als die Rolle 48 auf das Blech 10, 12, 14 zustellbar und/oder von dem Blech 10, 12, 14 wegstellbar ist.

Bevorzugt ist jedoch vorgesehen, dass der Aktuator 34 zwei Rollen 48, 50 aufweist oder betätigt und die Rollen 48, 50 aufeinander zu und/oder voneinander wegstellbar sind, wie dies durch den Pfeil 40 angedeutet ist. Aus den Figuren 1, 3 ist ersichtlich, dass zwischen den Rollen 48, 50 die zu fügenden Bleche 10, 12, 14 angeordnet sind, deren Fügeflächen 20, 22 spitzwinklig zueinander ausgerichtet und den Fügespalt 26, 28 bilden.

Bevorzugt sind der Aktuator 34 beziehungsweise die Rolle oder Rollen 48, 50 mittels eines servoelektrischen Antriebes aufeinander zu beziehungsweise voneinander wegstellbar. Die Drehachse 52, 54 der einen oder mehreren Rollen 48, 50 schließen mit der Fügeebene 16 der Bleche 10, 12, 14 einen Winkel im Bereich von circa 5° bis circa 20° ein. Die Spannvorrichtung beziehungsweise der Aktuator 34 sind entweder stationär oder relativ zu den Bauteilen verfahrbar angeordnet. Im Ausführungsbeispiel der Figur 4 sind die Spannvorrichtung 38 beziehungsweise der Aktuator 34 in dem Kopf der Laserschweißvorrichtung integriert.

Die Rollen 48, 50 können auch durch Stifte, Finger oder dergleichen Andruckelemente ersetzt werden.

Bevorzugt finden das Verfahren sowie auch die Vorrichtung Anwendung bei dem Fügen von Blechen 10, 12, 14 durch Laserstrahlschweißen, wobei die Bleche 10, 12, 14 beschichtet, insbesondere verzinkt sind.

### Bezugszeichenliste

- 10 -: Blech (Unterblech)
- 12 -: Blech (Oberblech)
- 14 -: Blech (Zwischenblech)
- 16 -: Fügeebene
- 18 -: Laserstrahl
- 20 -: Fügefläche
- 22 -: Fügefläche
- 24 -: Fügestelle
- 26 -: Fügespalt
- 28 -: Fügespalt
- 30 -: Sensor
- 32 -: Steuer- oder Regelkreis
- 34 -: Aktuator
- 36 -: Schweißplasma
- 38 -: Spannvorrichtung
- 40 -: Pfeil
- 42 -: Flansche
- 44 -: Vorrichtung
- 46 -: Laser, Laseroptik
- 48 -: Rolle, Finger
- 50 -: Rolle, Finger
- 52 -: Drehachse
- 54 -: Drehachse
- 56 -: Roboteranbindung
- 58 -: Laserlichtkabel
- 60 -: Sensorbox
- 62 -: Bauteilspannvorrichtung

## Patentansprüche

1. Laserstrahl-Schweißverfahren zum Fügen von Bauteilen, wie Bleche (10, 12, 14), insbesondere beschichtete Bleche, wobei die Fügeebene (16) der Bauteile und der Laserstrahl (18) einen Winkel größer 30°, bevorzugt im Bereich von 60° bis 120°, einschließen die Fügeflächen (20. 22) der Bauteile im Bereich der Fügestelle (24) einen Fügespalt (26) bilden, wobei mittels eines Sensors (30) Prozessmesswerte des Schweißverfahrens erfasst werden und über ein Steuer- oder Regelkreis (32) und einen Aktuator (34) Prozessparameter in Abhängigkeit der erfassten Prozessmesswerte eingestellt werden, wobei der Sensor (30) Prozessmesswerte des laserinduzierten Schweißplasmas (36) erfasst und der Aktuator (34) als wenigstens einen Prozessparameter den Fügespalt (26, 28) der Bauteile einstellt, **dadurch gekennzeichnet, daß** die Bauteile mittels des als Spannvorrichtung (38) ausgebildeten Aktuators (34) aufeinander zu und/oder voneinander weg (Pfeil 40) positionierbar sind, wobei als Prozessmesswerte ein Mittelwert des Frequenzspektrums oder ein Teil des Frequenzspektrums des Schweißplasmas (36) erfasst werden.

2. Verfahren nach Anspruch 1, **dadurch gekennzeichnet, dass** das sichtbare Frequenzspektrum des Schweißplasmas (36) erfasst wird.

3. Verfahren nach einem der vorhergehenden Ansprüche, **dadurch gekennzeichnet, dass** der Aktuator (34) stationär angeordnet ist.

4. Verfahren nach einem der vorhergehenden Ansprüche 1 bis 2, **dadurch gekennzeichnet, dass** der Aktuator (34) als mitlaufende Spannvorrichtung (38) ausgebildet ist.

5. Verfahren nach einem der vorhergehenden Ansprüche, **dadurch gekennzeichnet, dass** der Steuer- oder Regelkreis (32) über den Aktuator (34) Prozessparameter als statischen Wert oder in Echtzeit einstellt, wobei im Falle der Steuerung aus einem ersten Fügevorgang Stellwerte für einen nachfolgenden Fügevorgang oder auch Qualitätsanalysewerte gewonnen werden und im Falle der Regelung während des Fügevorganges die Weite des Fügespaltes in Echtzeit auf einen Sollwert eingestellt wird.

6. Verfahren nach einem der vorhergehenden Ansprüche, **dadurch gekennzeichnet, dass** als weitere Prozessparameter die Zufuhr von Zusatzmaterial, insbesondere Zusatzdraht, eingestellt wird.

7. Verfahren nach einem der vorhergehenden Ansprüche, **dadurch gekennzeichnet, dass** wenigstens eines der zu fügenden Bleche (10, 12, 14) im Bereich der Fügestelle (24) im Überlappstoß mit der Fügeebene (16) einen spitzen Winkel, insbesondere einen Winkel größer 0° bis kleiner 10° oder 15°, einschließen.

8. Verfahren nach einem der vorhergehenden Ansprüche, **dadurch gekennzeichnet, dass** wenigstens zwei Bleche, ein Ober- und Unterblech (12, 10) oder drei oder mehrere Bleche, ein Ober-, Zwischen- und Unterblech (12, 14, 10), an der Fügestelle (24) gefügt werden, wobei zwischen benachbarten Blechen (12, 10; 12, 14; 14, 10) der Fügespalt (26, 28) vorgesehen ist.

9. Verfahren nach einem der vorhergehenden Ansprüche, wobei die Fügestelle (24) der Bleche (10, 12, 14) im Bereich überlappender Flansche (42) liegt.

10. Verfahren nach einem der vorhergehenden Ansprüche, wobei die Bleche (10, 12, 14) benachbart zur Fügestelle (24) einander anliegen und unter spitzwinkliger Ausrichtung zueinander im Bereich der Fügestelle (24) den Fügespalt (26, 28) bilden.

11. Vorrichtung (44), zur Durchführung des Laserstrahl-Schweißverfahrens nach einem der vorhergehenden Ansprüche, mit einem Laser (46) beziehungsweise einem Laserkopf zum Fügen von wenigstens zwei oder mehreren Blechen (10, 12, 14) mittels Laserstrahlschweißen, wobei die Bleche (10, 12, 14) im Überlappstoß ausgerichtet sind und die Fügefläche (20, 22) der Bleche (10, 12, 14) im Bereich der Fügestelle (24) einen Fügespalt (26, 28) bilden, wobei ein Sensor (30) Prozessmesswerte des laserinduzierten Schweißplasmas (36) erfasst und der Fügespalt (26, 28) der Bleche (10, 12, 14) mittels eines Aktuators (34) einstellbar ist, wobei der Aktuator (34) über einen Steuer- oder Regelkreis (32) angesteuert wird, **dadurch gekennzeichnet daß** der Aktuator (34) als Spannvorrichtung (38) ausgebildet ist, wobei der Sensor zum Erfassen eines Mittelwertes des Frequenzspektrums oder eines Teiles des Frequenzspektrums des Schweißplasmas (36) ausgebildet ist.

12. Vorrichtung nach Anspruch 11. **dadurch gekennzeichnet, dass** der Aktuator (34) wenigstens eine Rolle (48) aufweist oder betätigt, die auf das Blech (10, 12, 14) zustellbar und/oder von dem Blech (10, 12, 14) wegstellbar ist.

13. Vorrichtung nach einem der Ansprüche 11 bis 12, **dadurch gekennzeichnet, dass** der Aktuator zwei Rollen (48, 50) aufweist oder betätigt und die Rollen (48, 50) aufeinander zu und/oder voneinander wegstellbar sind (Pfeil 40).

14. Vorrichtung nach Anspruch 13, **dadurch gekennzeichnet, dass** zwischen den Rollen (48, 50) die zu fügenden Bleche (10, 12, 14) mit spitzwinklig zueinander ausgerichteten, einen Fügespalt (26, 28) bildenden Fügeflächen (20, 22) angeordnet sind.

15. Vorrichtung nach einem der Ansprüche 11 bis 14, **dadurch gekennzeichnet, dass** der Aktuator (34), insbesondere die Rolle oder Rollen (48, 50), mittels eines servoelektrischen Antriebes stellbar sind.

16. Vorrichtung nach einem der Ansprüche 12 bis 15, **dadurch gekennzeichnet, dass** die Drehachse (52, 54) der einen oder mehreren Rollen (48, 50) mit der Fügeebene (16) der Bleche (10, 12, 14) einen Winkel im Bereich von 5° bis ca. 20° einschließt.

17. Vorrichtung nach einem der Ansprüche 12 bis 16, **dadurch gekennzeichnet, dass** die Spannvorrichtung (38) stationär angeordnet oder relativ zu den Bauteilen verfahrbar ist.

18. Vorrichtung nach einem der Ansprüche 12 bis 17, **dadurch gekennzeichnet, dass** die Spannvorrichtung (38) in einen Laserschweißkopf integriert ist.

## Claims

1. Laser beam welding method for joining components, such as metal sheets (10, 12, 14), in particular coated metal sheets, the joining plane (16) of the components and the laser beam (18) forming an angle greater than 30°, preferably in the range from 60° to 120° and the joining surfaces (20, 22) of the components forming a joining gap (26) in the region of the joining location (24), wherein measured process values of the welding process are detected by means of a sensor (30) and process parameters are set in dependence on the detected measured process values by means of an open-loop or closed-loop control circuit (32) and an actuator (34) and wherein the sensor (30) detects measured process values of the laser-induced welding plasma (36) and the actuator (34) sets the joining gap (26, 28) of the components as at least one process parameter, **characterized in that** the components can be positioned towards one another and/or away from one another (arrow 40) by means of the actuator (34) formed as a clamping device (38), a mean value of the frequency spectrum or part of the frequency spectrum of the welding plasma (36) being detected as measured process values.

2. Method according to Claim 1, **characterized in that** the visible frequency spectrum of the welding plasma (36) is detected.

3. Method according to one of the preceding claims, **characterized in that** the actuator (34) is arranged in a stationary manner.

4. Method according to either of the preceding Claims 1 and 2, **characterized in that** the actuator (34) is formed as a co-running clamping device (38).

5. Method according to one of the preceding claims, **characterized in that** the open-loop or closed-loop control circuit (32) sets process parameters as a static value or in real time by way of the actuator (34), wherein, in the case of open-loop control, manipulated variables are obtained from a first joining operation for a subsequent joining operation or else quality analysis values are obtained and, in the case of closed-loop control, the width of the joining gap is set during the joining operation to a setpoint value in real time.

6. Method according to one of the preceding claims, **characterized in that** the feeding of additional material, in particular additional wire, is set as a further process parameter.

7. Method according to one of the preceding claims, **characterized in that** at least one of the metal sheets (10, 12, 14) to be joined forms an acute angle, in particular an angle greater than 0° to less than 10° or 15°, with the joining plane (16) in the region of the joining location (24) as a lap joint.

8. Method according to one of the preceding claims, **characterized in that** at least two metal sheets, an upper sheet (12) and a lower sheet (10), or three or more metal sheets, an upper sheet (12), an intermediate sheet (14) and a lower sheet (10), are joined at the joining location (24), the joining gap (26, 28) being provided between adjacent sheets (12, 10; 12, 14; 14, 10).

9. Method according to one of the preceding claims, the joining location (24) of the metal sheets (10, 12, 14) lying in the region of overlapping flanges (42).

10. Method according to one of the preceding claims, the metal sheets (10, 12, 14) adjacent to the joining location (24) lying one against the other and, in acute-angled alignment with one another, forming the joining gap (26, 28) in the region of the joining location (24).

11. Device (44), for carrying out the laser beam welding method according to one of the preceding claims, with a laser (46) or a laser head for joining at least two or more metal sheets (10, 12, 14) by means of laser beam welding, the metal sheets (10, 12, 14) being aligned in a lap joint and the joining surface (20, 22) of the metal sheets (10, 12, 14) forming a joining gap (26, 28) in the region of the joining location (24), wherein a sensor (30) detects measured process values of the laser-induced welding plasma (36) and the joining gap (26, 28) of the metal sheets (10, 12, 14) can be set by means of an actuator (34) and wherein the actuator (34) is activated by way of an open-loop or closed-loop control circuit (32), **characterized in that** the actuator (34) is formed as a clamping device (38), the sensor being formed for detecting a mean value of the frequency spectrum or part of the frequency spectrum of the welding plasma (36).

12. Device according to Claim 11, **characterized in that** the actuator (34) has or actuates at least one roller (48), which can be adjusted towards the metal sheet (10, 12, 14) and/or can be adjusted away from the metal sheet (10, 12, 14).

13. Device according to either of Claims 11 and 12, **characterized in that** the actuator has or actuates two rollers (48, 50) and the rollers (48, 50) can be adjusted towards each other and/or away from each other (arrow 40).

14. Device according to Claim 13, **characterized in that** the metal sheets (10, 12, 14) to be joined are arranged between the rollers (48, 50) with joining surfaces (20, 22) aligned at an acute angle in relation to each other and forming a joining gap (26, 28).

15. Device according to one of Claims 11 to 14, **characterized in that** the actuator (34), in particular the roller or rollers (48, 50) can be adjusted by means of a servoelectric drive.

16. Device according to one of Claims 12 to 15, **characterized in that** the axis of rotation (52, 54) of the one or more rollers (48, 50) forms an angle in the range from 5° to about 20° with the joining plane (16) of the metal sheets (10, 12, 14).

17. Device according to one of Claims 12 to 16, **characterized in that** the clamping device (38) is arranged in a stationary manner or can be made to move in relation to the components.

18. Device according to one of Claims 12 to 17, **characterized in that** the clamping device (38) is integrated in a laser welding head.

## Revendications

1. Procédé de soudage par faisceau laser en vue de la jonction de composants, par exemple des tôles (10, 12, 14) et en particulier des tôles revêtues,
le plan de jonction (16) des composants et le faisceau laser (18) formant un angle supérieur à 30° et de préférence compris dans la plage de 60° à 120°,
les surfaces de jonction (20, 22) des composants formant un interstice de jonction (26) dans la zone occupée par l'emplacement de jonction (24),
des valeurs de mesure de processus de l'opération de soudage étant saisies au moyen d'un détecteur (30) et des paramètres du processus étant réglés par une boucle de commande ou de régulation (32) et un actionneur (34) en fonction des valeurs de mesure de processus saisies,
le détecteur (30) saisissant des valeurs de mesure de processus du plasma de soudage (36) induit par le laser et l'actionneur (34) réglant en tant qu'au moins un paramètre de processus l'interstice de jonction (26, 28) entre les composants,
**caractérisé en ce que**
les composants peuvent être approchés et/ou éloignés l'un de l'autre (flèche 40) au moyen de l'actionneur (34) configuré comme dispositif de serrage (38) et
**en ce qu'**une valeur moyenne du spectre de fréquence ou d'une partie du spectre de fréquence du plasma de soudage (36) est saisie comme valeur de mesure de processus.

2. Procédé selon la revendication 1, **caractérisé en ce que** le spectre de fréquence visible du plasma de soudage (36) est saisi.

3. Procédé selon l'une des revendications précédentes, **caractérisé en ce que** l'actionneur (34) est stationnaire.

4. Procédé selon l'une des revendications 1 et 2 qui précèdent, **caractérisé en ce que** l'actionneur (34) est configuré comme dispositif de serrage (38) entraîné conjointement.

5. Procédé selon l'une des revendications précédentes, **caractérisé en ce que** la boucle de commande ou de régulation (32) règle des paramètres de processus en tant que valeurs statiques ou en temps réel par l'intermédiaire de l'actionneur (34), **en ce que** pour la commande, des valeurs de réglage d'une opération suivante de jonction ou également des valeurs d'analyse de qualité d'une première opération de jonction sont saisies et **en ce que** pour la régulation, la largeur de l'interstice de jonction est réglée en temps réel à une valeur de consigne pendant l'opération de jonction.

6. Procédé selon l'une des revendications précédentes, **caractérisé en ce que** l'apport de matériau d'apport, en particulier un fil d'apport, est réglé comme autre paramètre de processus.

7. Procédé selon l'une des revendications précédentes, **caractérisé en ce que** dans la zone occupée par l'emplacement de jonction (24), au moins l'une des tôles (10, 12, 14) à rejoindre forme avec le plan de jonction (6) dans la jonction superposée un angle aigu et en particulier un angle supérieur à 0° mais inférieur à 10° ou 15°.

8. Procédé selon l'une des revendications précédentes, **caractérisé en ce qu'**au moins deux tôles, à savoir une tôle supérieure et une tôle inférieure (12, 10), ou au moins trois tôles, à savoir une tôle supérieure, une tôle intermédiaire et une tôle inférieure (12, 14, 10), sont jointes à l'emplacement de jonction (24), l'interstice de jonction (26, 28) étant prévu entre des tôles (12, 10; 12, 14; 14, 10) voisines.

9. Procédé selon l'une des revendications précédentes, dans lequel l'emplacement de jonction (24) des tôles (10, 12, 14) est situé dans la zone occupée par les bordures (42) superposées.

10. Procédé selon l'une des revendications précédentes, dans lequel les tôles (10, 12, 14) sont placées l'une contre l'autre au voisinage de l'emplacement de jonction (24) et forment l'interstice de jonction (26, 28) en étant orientées l'une par rapport à l'autre sous un angle aigu dans la zone occupée par l'emplacement de jonction (24).

11. Dispositif (44) en vue de l'exécution du procédé de soudage par faisceau laser selon l'une des revendications précédentes, qui présente
un laser (46) ou une tête laser destinés à rejoindre deux ou plusieurs tôles (10, 12, 14) par soudage par faisceau laser, les tôles (10, 12, 14) étant alignées à la jonction de superposition et les surfaces de jonction (20, 22) des tôles (10, 12, 14) formant un interstice de jonction (26, 28) dans la zone occupée par l'emplacement de jonction (24),
un détecteur (30) saisissant des valeurs de mesure de processus du plasma de soudage (36) induit par le laser et l'interstice de jonction (26, 28) des tôles (10, 12, 14) pouvant être réglé au moyen d'un actionneur (34), l'actionneur (34) étant commandé par une boucle de commande ou de régulation (32),
**caractérisé en ce que**
l'actionneur (34) est configuré comme dispositif de serrage (38) et
**en ce que** le détecteur est configuré pour saisir une valeur moyenne du spectre de fréquence ou d'une partie du spectre de fréquence du plasma de soudage (36).

12. Dispositif selon la revendication 11, **caractérisé en ce que** l'actionneur (34) présente ou actionne au moins un galet (48) qui peut être placé sur la tôle (10, 12, 14) et/ou peut être écarté de la tôle (10, 12, 14).

13. Dispositif selon l'une des revendications 11 à 12, **caractérisé en ce que** l'actionneur présente ou actionne deux galets (48, 50) et **en ce que** les galets (48, 50) peuvent être approchés et/ou éloignés l'un de l'autre (flèche 40).

14. Dispositif selon la revendication 13, **caractérisé en ce que** les tôles (10, 12, 14) à rejoindre, dont les surfaces de jonction (20, 22) sont orientées l'une par rapport à l'autre sous un angle aigu et forment un interstice de jonction (26, 28,) sont disposées entre les galets (48, 50).

15. Dispositif selon l'une des revendications 11 à 14, **caractérisé en ce que** l'actionneur (34) et en particulier le ou les galets (48, 50) peuvent être déplacés au moyen d'un entraînement servo-électrique.

16. Dispositif selon l'une des revendications 12 à 15, **caractérisé en ce que** l'axe de rotation (52, 54) du ou des galets (48, 50) forme avec le plan de jonction (16) des tôles (10, 12, 14) un angle compris dans la plage de 5° à environ 20°.

17. Dispositif selon l'une des revendications 12 à 16, **caractérisé en ce que** le dispositif de serrage (38) est stationnaire ou peut être déplacé par rapport aux composants.

18. Dispositif selon l'une des revendications 12 à 17, **caractérisé en ce que** le dispositif de serrage (38) est intégré dans une tête de soudage par laser.
